# EUROPÄISCHE PATENTANMELDUNG

(11) **EP 2 110 641 A2**
(43) Veröffentlichungstag der Anmeldung: **21.10.2009**
(21) Anmeldenummer: 09154829.7
(22) Anmeldetag: 11.03.2009
(51) Int. Cl.: G01D 3/02

(54) **Verfahren zur Generierung von Ersatzwerten für Messwerte in einer Steuerung**

(30) Priorität: 14.04.2008 DE 102008001143
(71) Anmelder: ZF Friedrichshafen AG, 88038 Friedrichshafen (DE)
(72) Erfinder: Veittinger, Stefan, 88085, Langenargen (DE)

(57) **Zusammenfassung**

Die Erfindung betrifft ein Verfahren zur Generierung von Ersatzwerten für Messwerte in einer Steuerung (1) oder Regelung, wobei wenigstens zwei Messgrößen (T2, T3) miteinander in Beziehung gesetzt werden.

Es wird erfindungsgemäß vorgeschlagen, dass zunächst wenigstens ein Wert (Δt1,.. , Δt18) in einer Speichereinheit (11) der Steuerung (1) hinterlegt wird, der eine bestimmte Beziehung zwischen den zumindest zwei Messgrößen (T2, T3) vordefiniert, dass im Betrieb der Steuerung (1) die Messgrößen (T2, T3) gemessen und die vordefinierte Beziehung (Δt1,.. , Δt18) durch die sich aufgrund der Messung tatsächlich im Betrieb ergebende Beziehung (Δt1',.. , Δt18') in der Speichereinheit (11) überschrieben wird, und dass nach dem Erkennen eines Fehlers oder eines Ausfalls eines einer Messgröße (T2, T3) zugeordneten Messgerätes (S2, S3) mit Hilfe der sich aufgrund der Messung tatsächlich im Betrieb ergebenden Beziehung (Δt1',.. , Δt18') ein Ersatzwert für den durch das fehlerhafte bzw. ausgefallene Messgerät (S2, S3) zu messenden Messwert (T2, T3) berechnet und der Steuerung (1) zur weiteren Verarbeitung zur Verfügung gestellt wird.

## Beschreibung

Die Erfindung betrifft ein Verfahren zur Generierung von Ersatzwerten für Messwerte in einer Steuerung oder Regelung, wobei wenigstens zwei Messgrößen miteinander in Beziehung gesetzt werden.

Die Verwendung von Ersatzwerten ist in der Mess- und Regeltechnik bekannt, um die Ausfalltoleranz von Mess- und Regelsystemen möglichst hoch zu halten. Ein System wird dabei als "ausfall-tolerant " bezeichnet, wenn es Ausfälle interner Komponenten, die zu Ausfällen von bestimmten, benötigten Ausgangsinformation führen können, rechtzeitig erkennt und durch geeignete Gegenmaßnahmen verhindert, dass die gesamte Ausgangsgröße eine geforderte Genauigkeit unterschreitet bzw. erst gar nicht gebildet werden kann.

In der nächstliegenden DE 36 38 131 A1 ist ein Kühlsystem einer wassergekühlten Fahrzeug-Brennkraftmaschine beschrieben, bei der eine größtmögliche Sicherheit für die Brennkraftmaschine bei Ausfall eines oder aller beteiligten Wärmefühler (konkret sind zwei Wärmefühler bzw. Wärmesensoren vorgesehen) erreicht werden soll. Zu diesem Zweck weist das Kühlsystem eine elektronische Steuereinheit auf, die beim Ausfall eines Wärmefühlers die Funktion des ausgefallenen Wärmefühlers mit übernimmt, indem ein Temperatur-Ersatzwert gebildet wird, welcher der tatsächlichen Temperatur an der Stelle des ausgefallenen Wärmefühlers weitgehend entspricht. Dieser Temperatur-Ersatzwert wird in der Art ermittelt, dass die experimentell unter Normalbedingungen gemessene und hinterlegte bzw. abgespeicherte Temperaturdifferenz zwischen den von den beiden Fühlern festgestellten Temperaturen von der Temperatur, die von dem nicht ausgefallenen Fühler festgestellt wird, abgezogen bzw. zu dieser Temperatur hinzu addiert wird. Ergänzend wird vorgeschlagen, die für den Normalbetrieb experimentell ermittelte und in der Steuereinheit hinterlegte Temperatur-Differenz zusätzlich in Abhängigkeit von der Motordrehzahl und/oder der Fahrgeschwindigkeit zu modifizieren, um mit drehzahl-und/oder fahrgeschwindigkeitsabhängigen Werten zu einer noch exakteren Regelung zu kommen.

In der DE 10 2006 033 351 A1 ist ein Verfahren zur Bestimmung eines Bremsdrucks beschrieben, bei dem bei Ausfall eines Drucksensors ein Druck-Ersatzwert auf rechnerischer Basis anhand von anderen der Systemsteuerung bzw. Systemregelung vorliegenden Informationen (zum Beispiel Sensorinformationen) gebildet werden kann. Beispielsweise werden zur Ersatzwertberechnung bestimmte gemessene Größen, wie die Fahrzeugverzögerung und die Fahrbahnlängsneigung miteinander in Beziehung gesetzt.

Die DE 101 35 586 B4 beschreibt ein Rekonfigurationsverfahren für ein Sensorsystem zur Kompensation von Ausfällen eines Sensorsystems. Dabei sind zumindest zwei Beobachter (jeder Beobachter besteht jeweils aus zumindest einem Sensor zur Messung von System-Zuständen und zumindest einen Systemmodell zur Schätzung von System-Zuständen eines Anwendungssystems) vorgesehen, wobei bei Erkennung der Fehlerhaftigkeit bzw. des (zeitweisen) Ausfalls eines Beobachters ersatzweise ein weiterer Beobachter aktiviert wird. Zur Bewertung des Auswahlstatus werden Schwellenwerte definiert, die jeweils die Abweichung zwischen dem gemessenen und vom Systemmodell geschätzten Systemzustand darstellen, wobei ein erster Schwellwert auf einen drohenden Ausfall eines Beobachters hindeutet und ein zweiter Schwellwert den Ausfall eines Beobachters bestätigt.

Der vorliegenden Erfindung liegt die Aufgabe zu Grunde, ein gattungsgemäßes Verfahren vorzustellen, bei dem die Berechnung der im Fehlerfall heranzuziehenden Ersatzwerte der realen Situation möglichst optimal angepasst werden kann, wobei der zu betreibende Aufwand der Steuerung möglichst gering gehalten werden soll.

Die vorliegende Aufgabe wird durch die Merkmale des Hauptanspruchs gelöst. Die Unteransprüche beschreiben vorteilhafte Aus- bzw. Weiterbildungen der Erfindung.

Die Erfindung geht demnach aus von einem Verfahren zur Generierung von Ersatzwerten für Messwerte in einer Steuerung oder Regelung, wobei wenigstens zwei Messgrößen miteinander in Beziehung gesetzt werden. Erfindungsgemäß ist vorgesehen, dass zunächst wenigstens ein Wert in einer Speichereinheit der Steuerung hinterlegt wird, der eine bestimmte Beziehung zwischen den zumindest zwei Messgrößen vordefiniert, dass im Betrieb der Steuerung die Messgrößen gemessen und die vordefinierte Beziehung durch die sich aufgrund der Messung tatsächlich im Betrieb ergebende Beziehung in der Speichereinheit überschrieben wird, und dass nach dem Erkennen eines Fehlers oder eines Ausfalls eines einer Messgröße zugeordneten Messgerätes mit Hilfe der sich aufgrund der Messung tatsächlich im Betrieb ergebenden Beziehung ein Ersatzwert für den durch das fehlerhafte bzw. ausgefallene Messgerät zu messenden Messwert berechnet und der Steuerung zur weiteren Verarbeitung zur Verfügung gestellt wird.

Durch dieses Verfahren ist eine sehr gute Anpassung an die reale Situation des Systems möglich, da die Beziehung zwischen den Messwerten (vorzugsweise nach einer entsprechenden Entprellzeit und unter geeigneter, beispielsweise gleitender Durchschnittswertbildung, um Schwankungen und Ungenauigkeiten weitgehend auszuschließen) im realen Betrieb ständig nachgeführt bzw. angepasst wird. Somit können jederzeit Ersatzwerte berechnet werden, die auf realistischen, dem jeweils applizierten System entsprechenden Messwerten beruhen.

Von Vorteil ist dabei, wenn die wenigstens zwei Messgrößen gleichartig sind, also die gleiche physikalische Größe angeben, und die vordefinierte bzw. sich tatsächlich im Betrieb ergebende Beziehung zwischen den zumindest zwei Messgrößen durch einen geschätzten bzw. tatsächlich gemessenen Differenzbetrag der Werte der wenigstens zwei Messgrößen gebildet ist. Dies vereinfacht den Mess- und auch den Rechenaufwand für die Ersatzwertbildung und führt mithin zu einer schnelleren Arbeitsweise der Steuerung.

Das erfindungsgemäße Verfahren kann besonders einfach realisiert werden, wenn zweckmäßigerweise die wenigstens zwei Messgrößen Temperaturen sind. Eine Messgröße kann beispielsweise die Temperatur eines in einem Motor eines Kraftfahrzeugs befindlichen Motoröls und die anderen Messgröße beispielsweise die Temperatur einer Motor-Steuerung sein, welche der Wärmeentwicklung des Motors ausgesetzt ist. Ebenso können auch die Getriebeöltemperatur und die Temperatur einer Getriebe-Steuerung genutzt werden, wobei die Getriebe-Steuerung der Wärmeentwicklung des Getriebes ausgesetzt ist.

In einer äußerst vorteilhaften Weiterbildung des Erfindungsgedankens ist zudem vorgesehen, dass mehrere Werte für geschätzte bzw. gemessene Beziehungen zwischen den wenigstens zwei Messgrößen in der Speichereinheit der Steuerung oder Regelung hinterlegbar bzw. speicherbar sind. Somit lassen sich reale Beziehungswerte über einen gesamten, vorher festzulegenden Messbereich hinterlegen.

Selbstverständlich lässt sich nicht ausschließen, dass im ungünstigsten Fall sämtliche beteiligten Messgeräte bzw. Sensoren ausfallen. Für diesen Fall ist zweckmäßigerweise ein Notfallprogramm vorzusehen, derart, dass nach Erkennung von Fehlern aller den wenigstens zwei Messgrößen zugeordneten Messgeräten die vor dieser Fehlerkennung in einer weiteren Speichereinheit der Steuerung hinterlegten Werte verwendet werden. Diese werden, je nach Zeitpunkt eines solchen Ausfalls, entweder die anfangs vordefinierten bzw. einprogrammierten oder die bereits auf den tatsächlichen Messungen des konkreten Systems beruhenden Werte sein.

Das erfindungsgemäße Verfahren wird nachfolgend anhand eines bevorzugten Ausführungsbeispiels und einer Zeichnung näher erläutert. Dabei zeigt die einzige **Figur** ein stark vereinfachtes Blockschaltbild einer Steuerung, welche nach dem erfindungsgemäßen Verfahren arbeitet.

Die Steuerung 1 kann beispielsweise zur Ansteuerung eines Kühlmittel-Kreislaufes eines Kraftfahrzeuges dienen. Die Steuerung 1 weist dabei eine Subtrahiereinheit 10, eine erste Speichereinheit 11, eine Logik-Recheneinheit 12 sowie eine Logik-Auswerteeinheit 13 auf. Über Temperatursensoren S2 bzw. S3 werden im Betrieb der Steuerung 1 Temperaturen eines Motor-Steuergerätes (ECU=Engine Control Unit) 2 bzw. eines Motoröls 3 erfasst und in Form von Temperaturensignalen T2 bzw. T3 an die Steuerung 1 weitergeleitet.

Die Speichereinheit 11, welche vorzugsweise ein nicht flüchtiger, elektronischer Speicherbaustein (EEPROM) ist, wird vor der Inbetriebnahme der Steuerung 1 mit vordefinierten Temperatur-Differenzwerten Δt1 bis Δtn programmiert bzw. geladen, welches durch den von außen an die Speichereinheit 11 angelegten Pfeil Δt veranschaulicht ist. Die Anzahl der Temperatur-Differenzwerte Δt1 bis Δtn kann dabei in Abhängigkeit von den festzulegenden Temperaturklassen und des Temperaturbereichs variieren. Als Messbereich ist für das vorliegende Einsatzbeispiel ein Bereich von -30°C bis +150°C mit Temperaturklassen in einer Breite von 10 Kelvin festgelegt. Dadurch ergeben sich in diesem Fall 18 Temperaturklassen, also Temperatur-Differenzwerte Δt1 bis Δt18, wobei als "Default"-Differenzwert (vordefinierter Wert) zwischen den Temperatursignalen T2 und T3 ein Wert von 30 Kelvin über alle Temperaturklassen gewählt ist, also alle Werte Δt1 bis Δt18 zunächst auf 30 Kelvin in der Speichereinheit 11 gesetzt werden.

Bei Inbetriebnahme der Steuerung 1 werden die durch die Temperatursensoren S2, S3 im entsprechenden Messzyklus erzeugten Temperatursignale T2, T3 der Subtrahiereinheit 10 zugeführt und der berechnete Differenzwert (je nach der im Betrieb vorliegenden bzw. gerade erreichten Temperaturklasse) als Temperatur-Differenzwert Δt' in der Speichereinheit 11 hinterlegt. Das Überschreiben der vordefinierten Temperatur-Differenzwerte Δt durch die im realen Betrieb tatsächlich gemessenen Werte Δt' (Werte-Nachführung, siehe Pfeil Δt' zur Speichereinheit 11) erfolgt vorzugsweise erst nach einer festzulegenden Entprellzeit bzw. Einschwingzeit des Systems, wobei eine gleitende Durchschnittswertbildung vorteilhaft ist. Gleichzeitig werden die Temperatur - Signalwerte T2, T3 über entsprechende Signalleitungen der Logik-Recheneinheit 12 zugeführt und von dieser der Logik-Auswerteeinheit 13 und einer weiteren Speichereinheit 14 zugeführt. In Abhängigkeit von gemessenen Temperatur-Signalwerte T2, T3 werden entsprechende, nicht näher dargestellte Funktions-Einheiten F1 bis Fn von der Logik-Auswerteeinheit 13 in geeigneter Weise angesteuert. Die Funktions-Einheiten F1 bis Fn können beispielsweise ein Kühlerventilator, ein Ölkühler, ein Durchflussbegrenzer für Kühlflüssigkeit oder auch eine Signallampe für den Fahrer des Kraftfahrzeugs sein.

Wird nun durch die Logik-Recheneinheit 12 festgestellt, dass einer der beiden Temperatur-Signale T2 oder T3 im Rahmen einer festgelegten Plausibilitätskontrolle falsch ist (Sensordefekt) oder gar kein Signal geliefert wird (Sensorausfall), so wird von der Logik-Recheneinheit 12, welche wie die Subtrahiereinheit 10 ebenfalls mit der Speichereinheit 11 verbunden ist, ein in der Speichereinheit 11 hinterlegter Temperatur-Differenzwert Δt abgegriffen und mit dessen Hilfe durch Subtraktion oder Addition von oder zu dem "korrekten" Temperatur-Signal T2 oder T3 ein Ersatzwert für das fehlerhafte bzw. fehlende Temperatur-Signal T2 oder T3 berechnet. Dieser Ersatzwert wird als Ersatzwert gekennzeichnet und dann zusammen mit dem "korrekten" Temperatur-Signal T2 oder T3 an die Logik-Auswerteeinheit 13 zur weiteren Verarbeitung (siehe oben) und an die Speichereinheit 14 weitergeleitet.

Bei Fehlerhaftigkeit oder Ausfall beider Temperatursensoren S2, S3 wird die Situation vor Ausfall des zweiten Sensors "festgehalten", das heißt, die Logik-Auswerteeinheit 12 greift, zumindest für eine festzulegende Zeitspanne, auf die in der Speichereinheit 14 zuletzt hinterlegten Temperaturersatzwerte zurück. Bei Überschreiten der Zeitspanne kann vorgesehen sein, dass ein Funktionsbaustein Fn in Form einer Warneinrichtung angesteuert wird, die den Fahrer auf den Ausfall der Steuerung bzw. die Fehlerhaftigkeit eines Sensorsignals aufmerksam macht.

### Bezugszeichen

- 1: Steuerung
- 10: Subtrahiereinheit
- 11: Speichereinheit für Temperatur-Differenzwerte
- 12: Logik-Recheneinheit
- 13: Logik-Auswerteeinheit
- 14: Speichereinheit für Temperatur-Werte
- 2: Motor-Steuergerät
- 3: Motoröl
- F1..Fn: Funktionseinheiten
- S2, S3: Temperatursensoren
- T2: Vom Temperatursensor S2 erzeugtes Temperatursignal
- T3: Vom Temperatursensor S3 erzeugtes Temperatursignal
- Δt1.. Δt18, Δtn: Vordefinierte Temperatur-Differenzwerte
- Δt1'.. Δt18', Δtn': Gemessene Temperatur-Differenzwerte

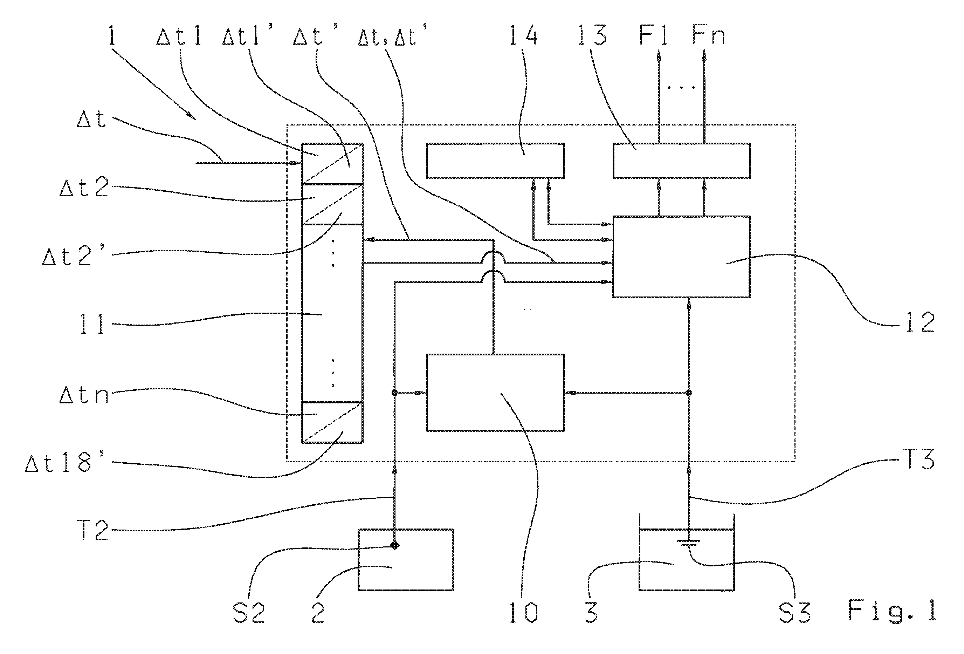

## Patentansprüche

1. Verfahren zur Generierung von Ersatzwerten für Messwerte in einer Steuerung (1) oder Regelung, wobei wenigstens zwei Messgrößen (T2, T3) miteinander in Beziehung gesetzt werden, **dadurch gekennzeichnet, dass** zunächst wenigstens ein Wert (Δt1,.. , Δt18) in einer Speichereinheit (11) der Steuerung (1) hinterlegt wird, der eine bestimmte Beziehung zwischen den zumindest zwei Messgrößen (T2, T3) vordefiniert, dass im Betrieb der Steuerung (1) die Messgrößen (T2, T3) gemessen und die vordefinierte Beziehung (Δt1,.. , Δt18) durch die sich aufgrund der Messung tatsächlich im Betrieb ergebende Beziehung (Δt1',.. , Δt18') in der Speichereinheit (11) überschrieben wird, und dass nach dem Erkennen eines Fehlers oder eines Ausfalls eines einer Messgröße (T2, T3) zugeordneten Messgerätes (S2, S3) mit Hilfe der sich aufgrund der Messung tatsächlich im Betrieb ergebenden Beziehung (Δt1',.. , Δt18') ein Ersatzwert für den durch das fehlerhafte bzw. ausgefallene Messgerät (S2, S3) zu messenden Messwert (T2, T3) berechnet und der Steuerung (1) zur weiteren Verarbeitung zur Verfügung gestellt wird.

2. Verfahren nach Anspruch 1, **dadurch gekennzeichnet, dass** die wenigstens zwei Messgrößen (T2, T3) gleichartig sind und die vordefinierte bzw. sich tatsächlich im Betrieb ergebende Beziehung (Δt1,.. , Δt18 bzw. Δt1',.. , Δt18' ) zwischen den zumindest zwei Messgrößen (T2, T3) durch einen geschätzten bzw. tatsächlich gemessenen Differenzbetrag (Δt1,.. , Δt18 bzw. Δt1',.. , Δt18') der Werte der wenigstens zwei Messgrößen (T2, T3) gebildet ist.

3. Verfahren nach Anspruch 1 oder 2, **dadurch gekennzeichnet, dass** die wenigstens zwei Messgrößen (T2, T3) Temperaturen sind.

4. Verfahren nach einem der vorherigen Ansprüche, **dadurch gekennzeichnet,** die wenigstens zwei Messgrößen (T2, T3) die Temperatur (T3) eines in einem Motor eines Kraftfahrzeugs befindlichen Motoröls und die Temperatur (T2) einer Motor-Steuerung sind, welche der Wärmeentwicklung des Motors ausgesetzt ist, oder dass die wenigstens zwei Messgrößen die Getriebeöltemperatur und die Temperatur einer Getriebe-Steuerung sind, wobei die Getriebe-Steuerung der Wärmeentwicklung des Getriebes ausgesetzt ist.

5. Verfahren nach einem der vorherigen Ansprüche, **dadurch gekennzeichnet, dass** mehrere Werte (Δt1,.. , Δt18; Δt1',.. , Δt18') für geschätzte bzw. gemessene Beziehungen in der Speichereinheit (11) der Steuerung (1) oder Regelung hinterlegbar sind.

6. Verfahren nach einem der vorherigen Ansprüche, **dadurch gekennzeichnet, dass** nach dem Erkennung von Fehlern aller den wenigstens zwei Messgrößen zugeordneten Messgeräten (S2, S3) die vor dieser Fehlererkennung in einer Speichereinheit (14) der Steuerung (1) hinterlegten Werte verwendet werden.
